Europäisches Patentamt

European Patent Office

Office européen des brevets

(19)

(11) Veröffentlichungsnummer: **0 128 591**
**B1**

(12) # EUROPÄISCHE PATENTSCHRIFT

(45) Veröffentlichungstag der Patentschrift:
**31.01.90**

(51) Int. Cl.⁴: **A 01 K 1/064**

(21) Anmeldenummer: **84106784.6**

(22) Anmeldetag: **14.06.84**

(54) **Ringhaken zum Anbinden von Rindvieh.**

(30) Priorität: **14.06.83 DE 8317340 U**

(43) Veröffentlichungstag der Anmeldung:
**19.12.84 Patentblatt 84/51**

(45) Bekanntmachung des Hinweises auf die Patenterteilung:
**31.01.90 Patentblatt 90/5**

(84) Benannte Vertragsstaaten:
**AT CH DE FR LI NL**

(56) Entgegenhaltungen:
**CH-A- 131 971**
**DE-A- 2 735 234**
**DE-C- 76 992**
**DE-C- 255 088**
**DE-C- 343 861**
**DE-C- 628 573**
**DE-U- 7 903 888**
**NL-A- 7 907 521**

(73) Patentinhaber: **N. HAU Masch.-Stalleinrichtungsbau, Benzstrasse 3, D-7096 Neuler (DE)**

(72) Erfinder: **Hau, Nikolaus, Benzstrasse 3, D-7091 Neuler (DE)**

(74) Vertreter: **Klingseisen, Franz, Dipl.-Ing. et al, Dr. F. Zumstein sen. Dr. E. Assmann Dr. F. Zumstein jun. Dipl.-Ing. F. Klingseisen Bräuhausstrasse 4, D-8000 München 2 (DE)**

## Beschreibung

Die Erfindung betrifft einen Ringhaken zum Anbinden von Rindvieh nach dem Oberbegriff des Anspruchs 1.

Ein derartiger Ringhaken ist beispielsweise aus dem DE-U 79 03 888 bekannt, wobei auf der auf ein Rohr aufzuschiebenden Muffe ein keilförmiges Verschlußteil außerhalb des Schwerpunkts angelenkt ist, so daß je nach Schwenkstellung des Ringhakens sich das Verschlußteil aufgrund der Schwerkraft selbsttätig in die Öffnungs- oder Schließstellung bewegt, wobei es in der letzteren am freien Ende des Bügels anliegt. Damit das Verschlußteil in der Schließstellung gehalten wird, ist ein Federbügel mit wenigstens zwei unterschiedlichen Schnappstellungen vorgesehen, der in einer dieser Schnappstellungen des Verschlußteils in der Schließstellung hält und als Sperrelement dient. Nachteilig bei dieser bekannten Ausführungsform ist, daß durch eine heftige Bewegung der am Ringhaken eingehängten Kette durch das Rind die Federkraft des Sperrelementes leicht überwunden werden kann, so daß die Anbindekette unbeabsichtigt vom Ringhaken gelöst wird.

Der Erfindung liegt die Aufgabe zugrunde, einen Ringhaken der eingangs angegebenen Art so auszubilden, daß ein Öffnen des Ringhakens durch die Bewegung der Anbindekette bzw. durch das angebundene Rind nicht möglich ist.

Diese Aufgabe wird durch die Merkmale im Kennzeichen des Anspruchs 1 gelöst.

Bei dieser Ausgestaltung kann ein Sperrelement für das Verschlußteil entfallen, wobei dennoch eine zuverlässige Sicherung der Anbindekette gewährleistet ist.

Weitere Ausgestaltungen gemäß der Erfindung sind in den Unteransprüchen wiedergegeben.

Eine beispielsweise Ausführungsform gemäß der Erfindung wird nachfolgend anhand der Zeichnung näher erläutert. Es zeigen:

Fig. 1 eine Ausführungsform des Ringhakens in der Öffnungsstellung, und

Fig. 2 den Ringhaken nach Fig. 1 in der Schließstellung.

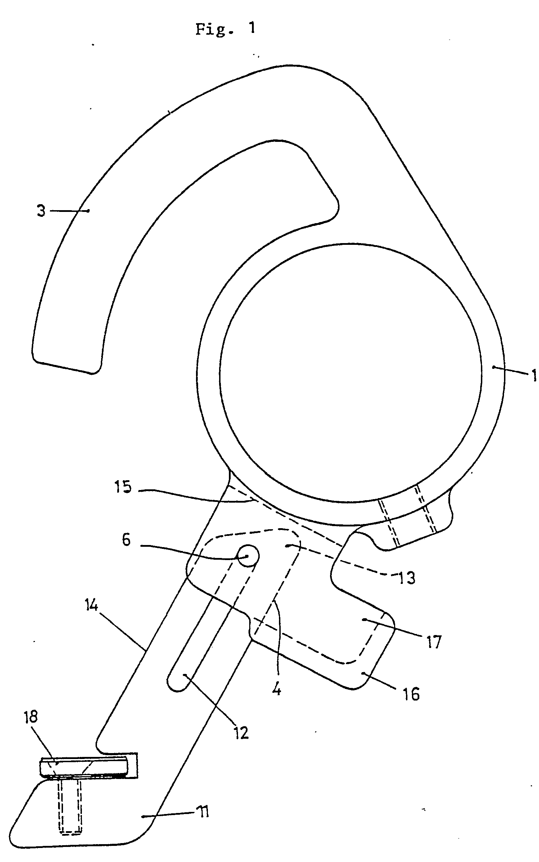

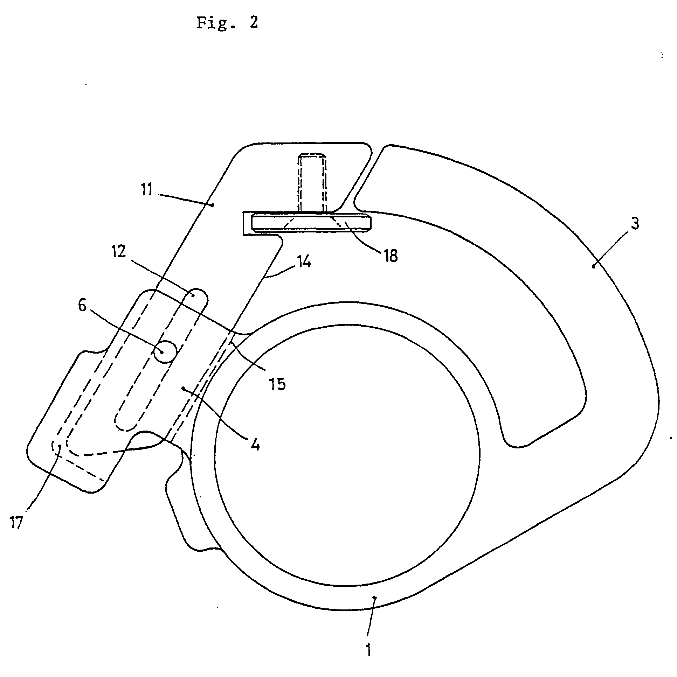

Die Fig. 1 und 2 zeigen eine Ausführungsform eines Ringhakens, bei der ein das Verschlußteil beaufschlagendes Sperrelement entfällt. Bei dieser Ausführungsform ist das Verschlußteil 11 langgestreckt ausgebildet und mit einem Langloch bzw. einem Schlitz 12 versehen, durch den die Anlenkachse 6 verläuft. Das Verschlußteil 11 ist zwischen zwei Laschen 4 angeordnet. Es ist um die Gelenkachse 6 verschwenkbar und durch den Schlitz 12 relativ zur Muffe 1 in tangentialer Richtung verschiebbar.

Der Schlitz 12 erstreckt sich etwa über die eine Hälfte des langgestreckten Verschlußteiles 11 bis nahe an das innere Ende, so daß das Verschlußteil 11 in der Öffnungsstellung nach Fig. 1 aufgrund seines Eigengewichts so weit nach unten schwenken kann, daß es etwa radial zur Muffe 1 liegt. Am innen liegenden Ende ist das Verschlußteil 11 abgeschrägt ausgebildet. Die Breite des Schlitzes 12 ist etwas größer als der Durchmesser der Gelenkachse 6. Die Breite des Verschlußteiles zwischen Schlitz 12 und Innenseite 14 ist etwas kleiner als der Abstand zwischen dem Außenumfang der Gelenkachse 6 und einer Führungsfläche 15, die zwischen den Laschen 4 etwa tangential zur Muffe 1 verläuft.

Die beiden Laschen 4 sind in Umfangsrichtung der Muffe 1 verlängert und längs der Außenränder durch einen senkrecht zur Zeichnungsebene liegenden Wandabschnitt 16 miteinander verbunden. Hierdurch wird eine Tasche 17 für das Ende des Verriegelungsteils 11 (Fig. 2) gebildet.

Wird der Ringhaken aus der Stellung in Fig. 1 im Uhrzeigersinn verschwenkt, so erreicht nach einer Drehung von 90° das Verschlußteil 11 eine Schräglage, in der es aufgrund seines Eigengewichts in Richtung auf die Muffe 1 gleitet, wobei das abgeschrägte Innenende des Verschlußteils 11 an der Führungsfläche 15 zum Anliegen kommt und das Verschlußteil 11 um die Gelenkachse 6 verschwenkt wird. Hierbei gleitet das Verschlußteil 11 mit dem inneren Ende nach unten in die Tasche 17, wie dies Fig. 2 zeigt. In dieser der Einbaustellung entsprechenden Stellung in Fig. 2 kann das Verriegelungsteil 11 durch die Anbindekette nicht um die Gelenkachse 6 in die Freigabestellung verschwenkt werden, da das innen liegende Ende an der Führungsfläche 15 zum Anliegen kommt und ein Verschwenken des Verschlußteiles 11 im Gegenuhrzeigersinn um die Gelenkachse 6 verhindert. Die Abdeckung des innen liegenden Endes des Verschlußteils 11 durch die Tasche 17 verhindert dabei, daß das Verschlußteil 11 durch die Hörner des angebundenen Rindes nach oben verschoben wird und dadurch in die Freigabestellung verschwenkt werden könnte.

Am äußeren Ende des Verschlußteils 11 ist in einem etwa quer zur Längsrichtung des Verschlußteils liegenden Schlitz eine exzentrische Scheibe 18 verdrehbar angebracht, die zur Sicherung des Verschlußteiles 11 in der Schließstellung dient, wie Fig. 2 zeigt. In Fig. 1 befindet sich diese Sicherungsscheibe 18 in einer Stellung, in der sie nicht mit dem freien Ende des Bügels 3 in Eingriff kommt, während Fig. 2 die Sperrstellung zeigt. Durch Verdrehen dieser Sicherungsscheibe 18 ist es möglich, das Freigeben einzelner Ringhaken zu verhindern, wenn sämtliche auf einem Rohr befindlichen Ringhaken durch Verdrehen des Rohres in die Freigabestellung verschwenkt werden.

Ist die Sicherungsscheibe 18 im Gegensatz zu der Darstellung nach Fig. 2 in der zurückgezogenen bzw. Außerbetriebsstellung und wird der Ringhaken aus der Stellung in Fig. 2 im Uhrzeigersinn verschwenkt, so erreicht das Verschlußteil 11 nach einer Schwenkbewegung des Ringhakens um 90° eine Schräglage, in der es aufgrund seines Eigengewichts aus der Tasche 17 längs der Führungsflächen 15 herausgleitet, wobei es während der weiteren Schwenkbewegung des Ringhakens um die Gelenkachse 6 schwenkt und schließlich die in Fig. 1 wiedergegebene Stellung erreicht, in der das Verschlußteil 11 an der Querwand 16 zwi-

**EP 0 128 591 B1**

schen den Verlängerungsabschnitten der Laschen 4 anliegt.

Das Verschlußteil 11 wie auch die Sicherung 18 können eine andere als die dargestellte Formgebung haben. So kann anstelle der Sicherungsscheibe 18 auch ein Bügel oder eine Klammer zum Festlegen des Verschlußteils 11 in der Schließstellung vorgesehen sein. In entsprechender Weise kann das äußere Ende des Verschlußteils 11 einer anderen Form der Sicherung angepaßt werden.

Die Querwand 16 zur Ausbildung der Tasche 17 kann auch entfallen, wenn die Verlängerung der Laschen 4 derart ausgebildet ist, daß das Verschlußteil 11 durch die Hörner eines Rindes nicht verschoben werden kann. Zur Begrenzung der Schwenkstellung des Verschlußteils 11 in der Stellung nach Fig. 1 kann hierbei die Nase 13 durch Anlage an der Führungsfläche 15 dienen, während in der Stellung nach Fig. 2 das Verschlußteil 11 durch eine Begrenzung der Länge des Schlitzes 12 gehalten wird, so daß in der Stellung nach Fig. 2 die Gelenkachse 6 am oben liegenden Ende des verkürzt ausgebildeten Schlitzes 12 anliegt.

**Patentansprüche**

1. Ringhaken zum Anbinden von Rindvieh, mit einem an einer Muffe befestigten Bügel und einem im Bereich des freien Endes des Bügels angelenkten Verschlußteil, das durch sein Eigengewicht in die Schließstellung verschwenkbar ist, dadurch gekennzeichnet, daß das Verschlußteil (11) langgestreckt ausgebildet und mit einem die Schwenkachse (6) aufnehmenden Schlitz (12) versehen ist, und daß sich der Schlitz (12) bis nahe an das innen liegende Ende des Verschlußteiles (11) erstreckt, das mit einer zur Längsrichtung des Verschlußteils (11) schräg liegenden Stellfläche versehen ist und mit einer auf dem Muffenumfang ausgebildeten Führungsfläche (15) zusammenwirkt.

2. Ringhaken nach Anspruch 1, dadurch gekennzeichnet, daß das Verschlußteil (11) zwischen zwei auf dem Muffenumfang angeordneten Laschen (4) angeordnet ist, die eine Tasche (17) zur Abdeckung des innen liegenden Endes des Verschlußteils (11) in der Schließstellung bilden.

3. Ringhaken nach den Ansprüchen 1 und 2, dadurch gekennzeichnet, daß eine Sicherung (18) zum Festlegen des Verschlußteils (11) in der Schließstellung vorgesehen ist.

**Claims**

1. Ring hook for tethering cattle, having a hook fixed to a ring and a locking part, hinged in the region of the free end of the hook, which locking part can be pivoted into the closed position by its own weight, characterized in that the locking part (11) is of elongated construction and is pivoted with a slot (12) accommodating the pivoting axis (6), and in that the slot (12) extends nearly to the inside end of the locking part (11), which end is provided with a positioning surface, which lies obliquely to the longitudinal direction of the locking part (11) and interacts with a guide surface (15) constructed on the ring circumference.

2. Ring hook according to Claim 1, characterized in that the locking part (11) is arranged between two brackets (4) arranged on the ring circumference, which brackets form a pocket (17) to cover the inside end of the locking part (11) in the closed position.

3. Ring hook according to Claims 1 and 2, characterized in that a safety catch (18) is provided to secure the locking part (11) in the closed position.

**Revendications**

1. Crochet annulaire destiné à l'accrochage du gros bétail de boucherie, avec une partie arquée fixée sur un embout et une partie de blocage articulée au niveau de l'extrémité libre de la partie arquée, partie de blocage qui par son propre poids peut basculer dans la position de fermeture, caractérisé en ce que la partie de blocage (11) est de conception allongée et est munie d'une fente (12) recevant l'axe de pivotement (6), et en ce que la fente (12) s'étend jusqu'à praximité de l'extrémité située à l'intérieur de la partie de blocage (11), extrémité qui est munie d'une surface de réglage située de façon oblique par rapport à la direction longitudinale de la partie de blocage (11) et qui coopère avec une surface de guidage formée sur la périphérie de l'embout.

2. Crochet annulaire selon la revendication 1, caractérisé en ce que la partie de blocage (11) est agencée entre deux attaches (4) situées sur la périphérie de l'embout, qui forment une poche (17) destinée à recouvrir l'extrémité située à l'intérieur de la partie de blocage (11).

3. Crochet annulaire selon les revendications 1 et 2, caractérisé en ce qu'un dispositif de sécurité (18) est prévue pour le maintien de la partie de blocage (11) dans la position de fermeture.

Fig. 1

Fig. 2